# EUROPÄISCHE PATENTANMELDUNG

(11) **EP 0 688 497 A1**
(43) Veröffentlichungstag der Anmeldung: **27.12.1995**
(21) Anmeldenummer: 95108697.4
(22) Anmeldetag: 07.06.1995
(51) Int. Cl.: A01G 27/06

(54) **Einrichtung für Pflanzenbehälter**

(30) Priorität: 23.06.1994 CH 1993/94
(71) Anmelder: Albin Heeb AG, CH-9464 Lienz (CH)
(72) Erfinder: Heeb, Albin, CH-9464 Lienz (CH); Eichmüller, Karl, CH-9463 Oberriet (CH)
(74) Vertreter: Hefel, Herbert, Dipl.-Ing.

(57) **Zusammenfassung**

Die Einrichtung ist für Pflanzenbehälter mit Erdkultur und Langzeitversorgung der Pflanze vorgesehen. Sie weist einen die Erde und die Pflanze aufnehmenden Blumentopf (6) und einen diesen Blumentopf (6) umschließenden äußeren Behälter (1) auf. Der Boden des Blumentopfes (6) ist vom Boden des äußeren Behälters (1) um ca. 1/3 der Höhe des äußeren Behälters distanziert. Der unterhalb des Bodens des Blumentopfes (6) befindliche Raum des äußeren Behälters dient als Vorratsraum für eine Nährflüssigkeit. Dieser Vorratsraum ist mit der im Blumentopf (6) befindlichen Erde (8) über mindestens einen saugfähigen Kapillarstrang (13) verbunden. Zur Festlegung des Blumentopfes (6) gegenüber dem äußeren Behälter (1) ist eine auf den Rand desselben auflegbare, hinsichtlich ihres Umfanges zum Umfang der Mündungsöffnung des Behälters (1) korrespondierend ausgebildete Deckelplatte (2) vorgesehen. Diese Deckelplatte (2) weist mindestens eine Durchstecköffnung (5) zur Aufnahme des Blumentopfes (6) auf. Der saugfähige
Kapillarstrang ist als dochtartige Schnur (13) ausgebildet.

## Beschreibung

Die Erfindung bezieht sich auf eine Einrichtung für Pflanzenbehälter mit den Merkmalen des Oberbegriffes des Patentanspruches 1.

Doppelwandige Behälter zum selbsttätigen Bewässern von Topfpflanzen sind in großer Zahl bekannt (DE-AS 1248 359; DE-OS 1905 522; deutsche Reichspatentschrift 867 180; US-PS 3 753 315; US-PS 3 775 904; US-PS 4 001 967). Der doppelwandige Behälter dient zur Aufnahme einer Nährflüssigkeit, und in das Innere des topfartig ausgebildeten doppelwandigen Behälters ist der eigentliche Blumentopf mit der Blumenerde und der Pflanze gestellt. Im bodennahen inneren Bereich des doppelwandigen Behälters ist eine Öffnung ausgespart, durch welche die Nährflüssigkeit austreten kann. Der Blumentopf steht mit seinem unteren Teil in dieser sich hier sammelnden Nährflüssigkeit. Ist die Nährflüssigkeit aufgebraucht, so muß der doppelwandige Behälter wiederum gefüllt werden, wozu eine dicht verschließbare Einfüllöffnung vorgesehen ist. Der Blumentopf mit der Blumenerde und der Pflanze muß aus dem doppelwandigen Behälter entfernt werden, damit während des Befüllens die erwähnte bodennahe Öffnung verschlossen werden kann, da sonst die oben eingefüllte Nährflüssigkeit unten austritt, da die beiden Räume kommunizierende Gefäße bilden, solange der doppelwandige Behälter nicht dicht verschlossen ist. Um diesen Austritt während des Nachfüllens zu vermeiden, wurden bei diesem doppelwandigen Behälter bereits Ventile und Klappen eingebaut (DE-AS 1248 359; DE-OS 1905 522; kanadische PS 1 1 156 464; EU-OS 209 498; EU-OS 108 241; DE-OS 2554 108; DE-OS 2634 037). Das Nachfüllen der Nährflüssigkeit ist zwar bei diesen doppelwandigen Behältern mit den erwähnten Ventil- und Klappenkonstruktionen einfacher, doch auch bei diesen Behältern stehen die eigentlichen Blumentöpfe mit der Blumenerde ständig in nassen bzw. zumindest feuchten Bereichen, was aus pflanzenphysiologischen Gründen nicht zweckmäßig ist, aus welchen Gründen sich solche Behälter in der Praxis bislang auch nicht haben durchsetzen können.

Eine erhebliche Verbesserung gegenüber diesem Stand der Technik stellt der Pflanzenbehälter nach dem DE-GM 8525 768 dar. Dieser Pflanzenbehälter ist einteilig aus Kunststoff ausgebildet, wobei der innere, die Erde aufnehmende Behälter nur ca. 2/3 der Höhe des äußeren Behälters einnimmt, so daß zwischen beiden Böden der Behälter ein als Vorratsraum für die Nährflüssigkeit ausgesparter Zwischenraum verbleibt, wobei dieser Raum mit dem Inneren des die Erde aufnehmenden Blumentopfes über eine Kapillarmatte verbunden ist. Dadurch befindet sich der eigentliche Blumentopf vollständig außerhalb des nassen Bereiches und die von ihm aufgenommene Erde bzw. Pflanze ist mit der Nährflüssigkeit nur über den erwähnten Kapillarstrang verbunden. Eine Überlauföffnung im äußeren Behälter stellt auch sicher, daß der für die Nährflüssigkeit vorgesehene Vorratsraum nicht überfüllt werden kann. Mit einer solchen Einrichtung werden für Pflanzen hervorragende Wachstumsbedingungen geschaffen. Eine hiezu vergleichbare Konstruktion zeigt auch die FR-PS 2394 242. Hier ist eine Wanne gezeigt und beschrieben, deren Boden eine Vielzahl von höckerartigen Erhebungen aufweist, auf welche die Blumentöpfe stellbar sind. Die Wanne ist doppelwandig ausgebildet für die Aufnahme einer Nährflüssigkeit, wobei durch die hier beschriebene Konstruktion sichergestellt ist, daß die Nährflüssigkeit im Bereich, wo die Blumentöpfe stehen, nicht über das Niveau der höckerartigen Erhebungen ansteigt. Ein Schwamm verbindet die Nährflüssigkeit und die Erde im Blumentopf.

Die beiden letzterwähnten vorbekannten Einrichtungen schaffen für die Entwicklung einer Topfpflanze äußerst günstige Bedingungen. Es ist nun zu bedenken, daß in Gärtnereien, aber vor allem in zahlreichen Haushalten einfache topf- bzw. trogartige Pflanzenbehälter vorgesehen sind, die mit Erde gefüllt werden und in welche dann die Pflanze eingesetzt wird. Ausgehend vom oben aufgezeigten Stand der Technik zielt die Erfindung nun darauf ab, eine Möglichkeit zu schaffen, die letzterwähnten und in großer Menge vorgesehenen Pflanzenbehälter durch eine Zusatzeinrichtung so zu gestalten, daß damit auch diese Pflanzenbehälter der von ihnen aufgenommenen Topfpflanze optimale Wachstumsbedingungen verschafft, um so zu vermeiden, daß alle diese Pflanzenbehälter entsorgt werden müssen. Zur Lösung dieser Aufgabe schlägt die Erfindung jene Maßnahmen vor, die Inhalt und Gegenstand des kennzeichnenden Teiles des Patentanspruches 1 sind. Dank dieses Vorschlages können die in großer Zahl vorhandenen Pflanzenbehälter ohne Werkzeug und ohne besonderen Aufwand in der Weise umgestaltet werden, daß sie den Pflanzen optimale Wachstumsbedingungen zu bieten vermögen.

Ohne die Erfindung einzuschränken, wird ein Ausführungsbeispiel anhand der Zeichnung näher erläutert, die einen Querschnitt durch einen Pflanzenbehälter zeigt.

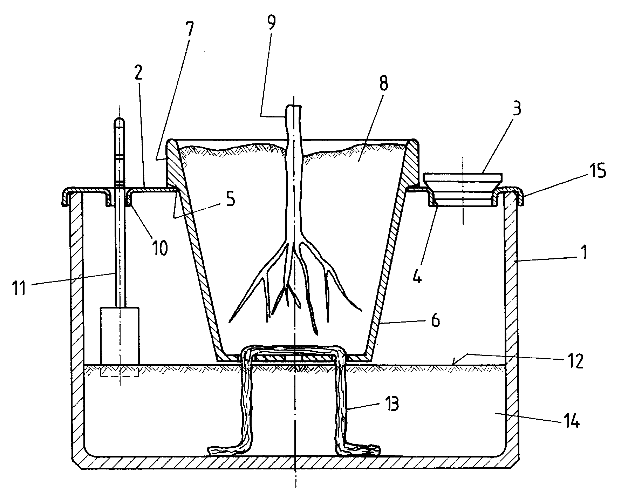

Der herkömmliche Pflanzenbehälter 1, der in der Zeichnung im Querschnitt dargestellt ist, kann trogartig ausgebildet sein und aus Kunststoff bestehen oder auch aus einem anderen Material. Viele solcher trogartigen Pflanzenbehälter sind aus Asbestzement gefertigt. Die Haupterstreckungsrichtung des aus Fig. 1 ersichtlichen und im Querschnitt dargestellten Pflanzenbehälters erstreckt sich rechtwinkelig zur Zeichenebene. Der Pflanzenbehälter 1 kann aber auch eine zylindrische oder ovale Form besitzen. Die Form des Pflanzenbehälters ist für die gegenständliche Erfindung nicht von Belang. Auf den oberen Rand dieses Behälters 1 ist nun eine Deckelplatte 2 aufgelegt, die hinsichtlich ihrer Umfangskontur der Umfangskontur der Mündungsöffnung des Behälters 1 entspricht. Der äußere Rand 15 dieser Deckelplatte 2 ist umgebördelt und übergreift formschlüssig den Rand des Behälters 1. Zweckmäßigerweise weist die frei auf dem Rand des Behälters 1 aufliegende Deckelplatte 2 eine flache, konkave, gegen ihren äußeren Rand 15 abfallende Bombierung auf. An einer randseitigen Stelle dieser Deckelplatte 2 ist eine mit einem Verschlußpfropfen 3 verschließbare Einfüllöffnung 4 ausgespart, über welche die Nährflüssigkeit 14 in den Behälter einfüllbar ist. In der Deckelplatte 2 ist eine Durchstecköffnung 5 ausgespart, in welche ein herkömmlicher Blumentopf 6 eingesetzt ist, wobei dieser Blumentopf 6 mit seiner radial auskragenden Schulter 7 auf dem Rand der Durchstecköffnung 5 aufliegt und hinsichtlich seiner Höhe so gewählt ist, daß er ca. über 2/3 der inneren Höhe des Behälters 1 in diesen ragt. Dieser Blumentopf 6 ist mit Erde 8 gefüllt, in die eine Pflanze 9 eingesetzt ist. Der Blumentopf 6 kann aus Kunststoff gefertigt sein oder auch aus einem anderen geeigneten Material wie beispielsweise Ton. Eine weitere vorzugsweise randseitig vorgesehene Öffnung 10 in der Deckelplatte 2 nimmt einen Pegelstandsanzeiger 11 auf, über welchen das Flüssigkeitsniveau 12 kontrollierbar ist. Dazu sind entsprechende Marken am Pegelstandsanzeiger angebracht. Das aus der Figur ersichtliche Flüssigkeitsniveau soll nicht überschritten werden, damit sichergestellt ist, daß der Blumentopf 6 mit seinem unteren Ende nicht in die Flüssigkeit ragt.

Eine dochtartige Schnur 13 verbindet den unterhalb des Bodens des Blumentopfes 6 befindlichen, mit der Nährflüssigkeit 14 gefüllten Raum mit dem Inneren des Blumentopfes 6. Diese dochtartige Schnur 13 ist aus Glasfasern gefertigt. Die Ausbildung dieser Schnur 13 aus Glasfasern ist ein für die gegenständliche Erfindung ganz wesentliches und wichtiges Merkmal. Mit Pflanzenbehältern der gegenständlichen Art wurden Langzeitversuche durchgeführt, wobei unter jeweils gleichen äußeren Bedingungen dochtartige Schnüre aus unterschiedlichen Materialien eingesetzt worden sind. Diejenigen Pflanzen, deren Topf 6 mit dochtartigen Schnüren 13 aus Glasfasern bestückt waren, haben gegenüber den anderen Pflanzen eine signifikant bessere Entwicklung gezeigt.

Es liegt im Rahmen der Erfindung, pro Blumentopf 6 mehrere dochtartige Schnüre 13 vorzusehen, die evtl. nicht benötigten Schnüre 13 werden dann einfach seitlich hochgezogen und ihre freien Enden werden dann zwischen den Rand der Durchstecköffnung 5 und dem eingesetzten Blumentopf 6 eingeklemmt, womit sie außerhalb des Flüssigkeitsniveaus 12 liegen. Ist die Deckelplatte 2 leicht bombiert, so daß sie gegen ihren äußeren Rand 15 etwas abfällt, so wird dadurch verhindert, daß Niederschlagswasser in das Innere des Behälters 1 gelangt, falls der Behälter im Freien steht. Handelt es sich beim Pflanzenbehälter 1 um einen langgestreckten trogartigen Behälter, so sind in der Deckelplatte 2 mehrere nebeneinander liegende Durchstecköffnungen vorgesehen. Im Bedarfsfalle können die eingesetzten Pflanzen gegen das einfallende Licht ausgerichtet werden, indem der Blumentopf 6 etwas angehoben und in der Durchstecköffnung 5 gedreht wird.

Dank des erfindungsgemäßen Vorschlages können herkömmliche und in großer Zahl vorhandene Pflanzenbehälter in der beschriebenen Weise nachgerüstet werden, so daß für die Pflanzen optimale Wachstumsbedingungen geschaffen werden. Dazu eignen sich alle vorhandenen Pflanzenbehälter, unabhängig vom Material, aus welchem sie gefertigt sind. Es sind nur Deckelplatten 2 zur Verfügung zu stellen, die in der beschriebenen Weise auf die Mündungsöffnung dieser vorhandenen Pflanzenbehälter aufgelegt werden können. Es ist daher nicht erforderlich, diese in großer Zahl vorhandenen Pflanzenbehälter zu entsorgen, falls deren Eigentümer wünscht, seinen Pflanzen optimale Wachstumsbedingungen zur Verfügung zu stellen.

### Legende zu den Hinweisziffern:

- 1: Pflanzenbehälter
- 2: Deckelplatte
- 3: Verschlußpfropfen
- 4: Einfüllöffnung
- 5: Durchstecköffnung
- 6: Blumentopf
- 7: Schulter
- 8: Erde
- 9: Pflanze
- 10: Öffnung
- 11: Pegelstandsanzeiger
- 12: Flüssigkeitsniveau
- 13: dochtartige Schnur
- 14: Nährflüssigkeit
- 15: Rand

## Patentansprüche

1. Einrichtung für Pflanzenbehälter mit Erdkultur und Langzeitversorgung der Pflanze mit mindestens einem die Erde und die Pflanze aufnehmenden Blumentopf und einem diesen Blumentopf umschließenden äußeren Behälter, wobei der Boden des Blumentopfes vom Boden des äußeren Behälters um ca. 1/3 der Höhe des äußeren Behälters distanziert ist und der unterhalb des Bodens des Blumentopfes befindliche Raum des äußeren Behälters als Vorratsraum für eine Nährflüssigkeit dient, wobei dieser Vortatsraum mit der im Blumentopf befindlichen Erde über mindestens einen saugfähigen Kapillarstrang verbunden ist, dadurch gekennzeichnet, daß zur Festlegung des Blumentopfes (6) gegenüber dem äußeren Behälter (1) eine auf den Rand desselben auflegbare, hinsichtlich ihres Umfanges zum Umfang der Mündungsöffnung des Behälters (1) korrespondierend ausgebildete Deckelplatte (2) vorgesehen ist und diese Deckelplatte (2) mindestens eine Durchstecköffnung (5) zur Aufnahme des Blumentopfes (6) aufweist.

2. Einrichtung nach Anspruch 1, dadurch gekennzeichnet, daß die vorzugsweise frei auf dem Rand des Behälters (1) aufliegende Deckelplatte (2) eine flache, konkave, gegen ihre äußeren Ränder abfallende Bombierung aufweist.

3. Einrichtung nach Anspruch 1 oder 2, dadurch gekennzeichnet, daß die Deckelplatte (2) einen nach unten umgebogenen Rand (15) aufweist, mit welchem sie den Rand des äußeren Behälters (1) formschlüssig übergreift.

4. Einrichtung nach Anspruch 1, dadurch gekennzeichnet, daß der in die Deckelplatte (2) eingesetzte Blumentopf (6) mit einer radial auskragenden Schulter (7) am Rand der Durchstecköffnung (2) aufliegt.

5. Einrichtung nach Anspruch 1, dadurch gekennzeichnet, daß der Blumentopf (6) in an sich bekannter Weise konisch ausgebildet ist und die Abmessungen der Durchstecköffnung (5) in der Deckelplatte (2) so festgelegt sind, daß der in die Durchstecköffnung (5) eingesetzte konische Blumentopf (6) etwa über 2/3 der inneren Höhe des äußeren Behälters (1) ragt.

6. Einrichtung nach Anspruch 1, dadurch gekennzeichnet, daß der saugfähige Kapillarstrang als dochtartige Schnur (13) ausgebildet ist.

7. Einrichtung nach Anspruch 6, dadurch gekennzeichnet, daß die dochtartige Schnur (13) aus Glasfasern besteht.

8. Einrichtung nach Anspruch 6, dadurch gekennzeichnet, daß pro Blumentopf (6) mehrere dochtartige Schnüre (13) vorgesehen sind.

9. Einrichtung nach einem der Ansprüche 1 bis 8, dadurch gekennzeichnet, daß in der Deckelplatte (2) eine Öffnung (10) für den Durchtritt eines Pegelstandsanzeigers (11) vorgesehen ist.

10. Einrichtung nach einem der Ansprüche 1 bis 8, dadurch gekennzeichnet, daß in der Deckelplatte (2) eine verschließbare Einfüllöffnung (4) vorgesehen ist.
